Europäisches Patentamt

European Patent Office

Office européen des brevets

(11) Publication number: **0 255 671**
**A2**

## EUROPEAN PATENT APPLICATION

(21) Application number: 87110798.3

(22) Date of filing: 24.07.87

(51) Int. Cl.4: **C09D 5/18** , C09K 21/14

(30) Priority: 25.07.86 US 889273
04.05.87 US 45519

(43) Date of publication of application:
10.02.88 Bulletin 88/06

(84) Designated Contracting States:
AT BE CH DE ES FR GB GR IT LI LU NL SE

(71) Applicant: F.R. Systems Inc.
146 Connaught Crescent
Bolton Ontario L0P 1A0(CA)

(72) Inventor: Lubomir Vajs
5580 Sheppard Avenue East
Toronto, Ontario M1B 2L3(CA)
Inventor: Pettit Daniel M.
146 Connaught Crescent
Bolton, Ontario LOP 1AO(CA)

(74) Representative: Kuhnen, Wacker & Partner
Schneggstrasse 3-5 Postfach 1729
D-8050 Freising(DE)

(54) Fire retardant.

(57) The present invention relates to fire retardants. In particular, the invention relates to fire retardants which provide fire resistance by the formation of two parts. The first part produces an intumescent foam and a vitrifying agent cooperates with the produced intumescent foam at higher temperatures to form the second part.

FIG.1.

EP 0 255 671 A2

## FIRE RETARDANT

BACKGROUND OF THE INVENTION

Intumescent paint-type coatings for providing fire resistance or fire protection to an underlying product are well known and produce a foam-type cellular layer when exposed to temperatures in excess of about 200°C. The produced foam layer insulates the underlying product and protects the same from direct contact with the flame. Intumescent paints are known for providing protection to products up to about 650°C, depending upon the intumescent used. At a temperature of about 650°C, the intumescent layer itself is consumed or starts to decompose whereby protection to the underlying product is reduced or lost. In some cases, the structural characteristics of the underlying product change substantially with heat and fillers have been added to the intumescent coatings to provide additional structural rigidity. For example, if the product being protected cannot support the intumescent foam layer, then certain fillers may be added which when exposed to the elevated temperatures, react to strengthen the foam layer. Intumescent coatings bubble and foam when exposed to high temperatures to produce a multicellular insulation.

In the case of high temperature protective coatings, vitrifying agents including silicone-type vitrifying materials have been used. However, the weight associated with a silicone vitrifying material used to protect an underlying product is quite high. Silicone-type materials may protect the underlying product, but tend to conduct heat readily and, therefore, are poor insulators. However, a problem with coatings is that any breakdown therein exposes product that is readily combustible.

It is also known to incorporate intumescent materials in a plastic foam product and in other cases, non-combustible filler material such as chlorinated paraffin are added directly to the product. These materials add fire resistance as they are exposed to the heat of combustion.

Presently, there is a need to provide protection to foam urethane products commonly used as cushions in the manufacture of seats. In the airline industry, new standards have been adopted which require stringent fire resistant characteristics, and the problem is compounded in that a retrofit solution is preferable. Furthermore, weight considerations become important as well as the comfort of the treated seat. For example, there are available fire resistant fabrics in which the cushions could be wrapped, however, these tend to be fairly expensive and result in a uncomfortable seat as the natural resiliency and texture of the cushion is lost or reduced. A second solution to the airline seat cushion problem has been the use of new foam cushions which have fire resistant fillers therethroughout, however, this results in a substantial increase in the weight of the cushions as well as resulting in an expensive cushion. A foam cushion containing silicone is sold under the trade mark POLYVOLTAC.

SUMMARY OF THE PRESENT INVENTION

According to the present invention, a fire retardant is described and taught which may be applied to, associated with, or incorporated in, rigid or flexible foam shapes or other substrates or materials and provide protection of the resultant product up to a temperature higher than the intumescent temperature discussed above. The fire retardant relies on a two part or stage protection system, in which the first part produces an intumescent foam layer and the second part involves vitrification of an agent carried in the intumescent foam layer to strengthen the layer and provide protection to the layer and the product at higher temperatures. Therefore, the second part is the combination of the intumescent layer which is strengthened or stabilized by the vitrifying agent such that the carbon of the intumescent foam is not consumed at high temperatures.

Thus, the present invention includes the fire retardant, articles which include the fire retardant to reduce the combustibility of the articles and methods of treating articles to increase the fire retardancy thereof.

A suitable elastomeric base may be used as a carrier for the fire retardant, especially when a coating is to be applied to a flexible product, as opposed to directly incorporating the fire retardant in the product, such base providing flexibility to the coating and reducing tendencies for cracking. This base or carrier, in the case of foam products, is preferably a water based elastomer such as a silicone water based elastomer.

According to one aspect of the present invention, a fire retardant composition is added during the manufacture of the product to add fire retardance or resistance. This mixture contains a known intumescent and a known vitrifying agent which cooperate to provide a protective surface layer which tends to reduce the combustibility of the product. This system first produces an intumescent foam layer and subsequently vitrifies a suitable agent carried in the intumescent foam layer to strengthen the layer and maintain the fire resistance of the layer. Therefore, the vitrifying agent strengthens or stabilizes such that the carbon of the intumescent foam layer is not consumed at high temperatures. The vitrifying agent also stabilizes or adds strength to the intumescent foam layer such that it is maintained on the surface of the product and reduces or prevents the substrate from dripping. Other aspects of the present invention will become apparent hereinafter.

Although the fire retardant composition of the invention has particular application for protecting combustible foam products, it is suitable for other products requiring fire protection, eg. as a coating on wood products, structural supports, building products, clothing, carpet backing, etc. In some cases, the fire retardant can be directly incorporated in the product during the manufacture thereof.

The fire retardant, applications thereof, and methods of treating substrates will be described with particular reference to urethane foam which is one embodiment of the invention.

BRIEF DESCRIPTION OF THE DRAWINGS

Preferred embodiments of the invention are shown in the drawings wherein;

Figure 1 is a perspective view of a cut away through a block of urethane foam to which the coating has been applied;

Figure 2 is a cross section taken along line 2-2 of Figure 1;

Figure 3 is a view similar to Figure 2 with a portion of the coating being exposed to heat of combustion and resulting in a localized formation of an intumecent cellular foam layer;

Figure 4 is a side view of a block of urethane foam to which a coating is being sprayed; and

Figure 5 is cut away through a block of urethane foam to which the fire retarding mixture has been added.

DETAILED DESCRIPTION OF THE PREFERRED EMBODIMENTS

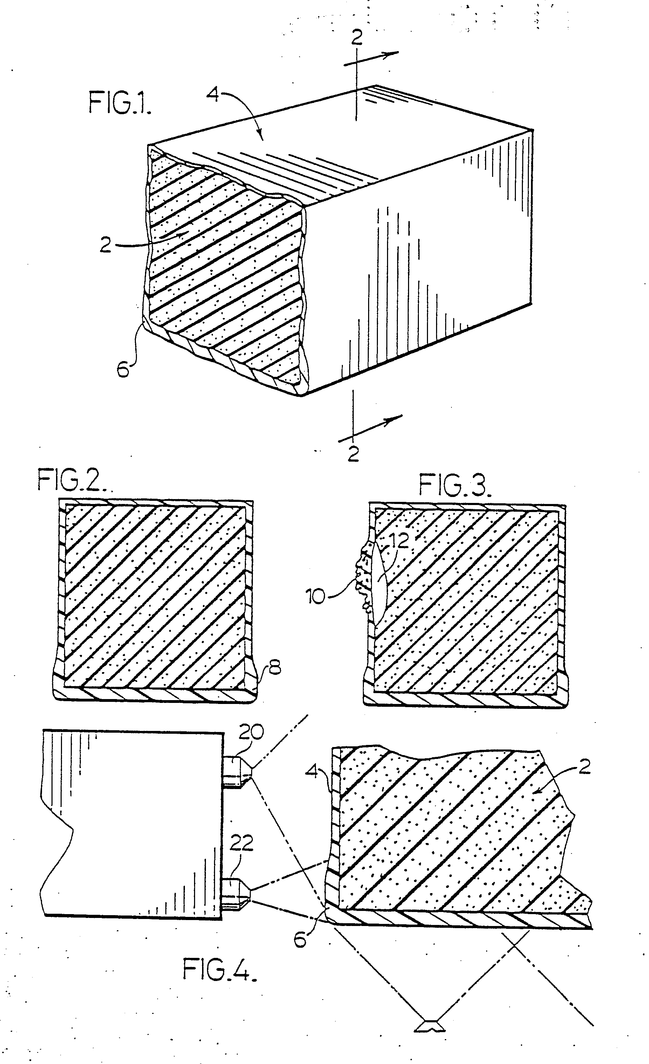

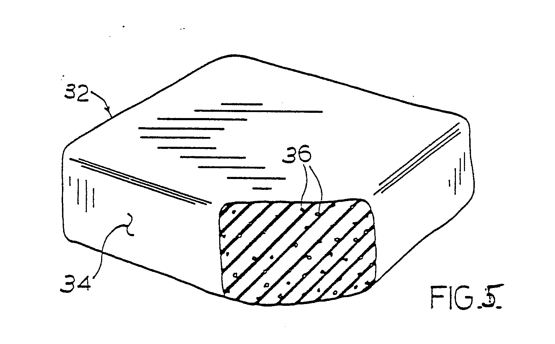

The urethane foam block 2 shown in the drawings, has a protective coating 4 applied to the outer surface thereof which is of a thickness preferably in the range of about 10/1000 of an inch to 60/1000 of an inch, and has good elastic properties whereby the characteristics of the foam with respect to comfort are retained. The coating includes a known intumescent material dispersed therethroughout which when exposed to heat experienced in combustion, produces a protective cellular layer generally shown as 10 in Figure 3, a vitrifying agent and a carrier.

A substantial amount of research has been done on intumescent materials of this type (carbon base, including a catalyst which produces phosphoric acid in combination with appropriate blowing agents), and they are normally employed in paints. The first part of the protective coating therefore is this intumescent material which reacts to provide the cellular foam layer in the same manner or at least in substantially the same manner as in known intumescent fire protective coatings. The second part of the protective coating is provided by a vitrifying agent, preferably a silicic base, which commences vitrification at a temperature substantially above the initial formation of the cellular foam layer. Vitrification of the vitrifying agent locks the intumescent material in a cellular foam state and protects this cellular layer from decomposition to greatly increase the effective temperature range of the intumescent cellular foam layer. The result is a combination of the insulating properties of the intumescent layer and the properties of the vitrifying agent, which may be used in a quantity substantially less than that required if the vitrifying agent was used alone.

In some cases, the urethane foam block will collapse behind the intumescent foam layer 10 as generally at 12, due to melting of the urethane foam. The intumescent cellular foam layer will continue to protect the urethane foam block and the melted urethane from the flames and reduce heat transfer from the flame to the urethane foam.

As shown in the embodiment of the Figures, a reinforced tray-like portion 6 covers the bottom of the foam block 2 and extends partially up the sides of the block with this layer 6 including non combustible reinforcing fibres such as glass fibres, generally indicated as 8 preferably randomly oriented and of a length of about 2 to 4 inches. As previously mentioned, in high temperature applications, the urethane foam block may be exposed to a temperature at which the urethane melts and the melted urethane collects near the bottom of the foam block. In some cases, the weight of the melted urethane would break through the vitrified intumescent foam layer 10 resulting in combustion of the urethane when exposed to the air and flame. The reinforcing region 6 provides additional strength to contain the melted urethane and generally acts as a tray. It has been found that the vitrified cellular foam layer 10 has sufficient strength to support itself, but does require reinforcing if there is a substantial melt of the urethane foam and protection of this melt is necessary.

For coatings, the intumescent and vitrifying materials are dispersed in a suitable carrier such as an elastomeric base, preferably a water based elastomeric base. The elastomeric base provides a carrier for the fireproofing materials and cooperates with the underlying substrate to generally maintain the compressibility and resiliency thereof. The selection of the base will depend upon the substrate to which the coating is to be applied. Water based elastomers cooperate with foam products to provide good adhesion, while generally maintaining the known properties of the foam product. For products other than foam, such as steel or wood substrates, a non-water based elastomer could be used. The carrier should be selected not to impair the two part fire protection process, while providing good adhesion of the coating to the substrate without substantially affecting the other desired physical properties of the substrate. Therefore, the carrier will be selected to be suitable for the intumescent and vitrifying materials and the substrate to be treated.

One method of applying the protective coating 4 to the urethane foam block 2 is shown in Figure 4, where two spray heads are shown as 20 and 22. Spray head 20 applies the fire retarding composition whereas head 22 applies the reinforcing fibers at the lower region of the foam block 2. In some case the water based elastomer is a silicone water based elastomer which at least forms part of the vitrifying agent. The spray heads preferably work in combination. A controlled amount of colour pigment may be contained in the fire proofing composition such that the thickness of the coating can be approximated by the resulting colour of the coating and comparing the same with a predetermined colour standard. This provides a simple method for quality control.

The elastomeric base acts as a carrier for the intumescent and vitrifying agents. Suitable elastomeric bases include water-based elastomers, examples of which are neoprene and silicone water-based elastomers. A silicone or neoprene water based elastomer as a carrier has a relatively high pH which will require a buffer to be used when ammonium polyphosphate is used in the preparation of the coating. The buffer increases the pH of the combined buffer and ammonium polyphosphate sufficiently to avoid adverse pH effects or pH shock to the carrier.

Suitable vitrifying agents include silica powder or nepheline syenite powder or sodium tetraborate or hydrated magnesium silicate, or aluminum silicate or silicon resins, and silicone water based elastomers. Sodium tetraborate provides protection up to approximately 740°C and, therefore, is a low temperature protection system. The silica powder may provide protection up to about 1500°C, whereas the hydrated magnesium silicate nepheline syenite powder, aluminum silicate, and silicon resins may provide protection to 1400°C to 1800°C. Where a silicone water base elastomer is used, it will vitrify at approximately 575°C and provide protection up to about 1400°C. Thus, the vitrifying agent increases the effective maximum useful temperature of the intumescent alone, preferably by at least 100°C, and in some cases more than doubles the prior maximum temperature.

The coating 4 in Figure 1 is relatively thin in the order of 10/1000 to 60/1000 of an inch and does not substantially alter the characteristics of the urethane foam with respect to compression and resiliency. This coating when exposed to high temperature heat produces a thick cellular foam layer where the density of the foam layer tends to be less at the exterior and greater near the interior adjacent the material that it is to protect. The strength added to the intumescent foam layer due to the vitrifying agent also increases from the exterior of the foam to the interior of the foam. This occurs as the density of the vitrifying agent at the time of vitrification is greater adjacent the foam block 2.

The coating may contain 17 to 40 parts by weight of ammonium polyphosphate, 17 to 27 parts by weight of pentaerythritol, 7 to 27 parts by weight of dicyandiamide, 45 to 75 parts by weight of water based elastomer preferably polychloroprene homopolymer and 5 to 50 parts by weight of a vitrifying agent preferably 99.6 silica powder or nepheline syenite powder or sodium tetraborate or hydrated magnesium silicate or aluminum silicate or silicon resin. One preferred coating includes 21% diammonium phosphate, 13% pentaerythritol, 7% dicyandiamide, 10% vitrifying agent and 49% water based elastomer.

In the case of a silicone water based elastomer being used, it may include 17 to 40 parts by weight of ammonium polyphosphate, 17 to 27 parts by weight of pentaerythritol, 7 to 27 parts by weight dicyandiamide and 45 to 75 parts by weight of silicone water base elastomer. The silicone water based elastomer will vitrify at about 575°C and the second stage will provide protection up to about 1400°C. One particularly suitable coating includes 26% ammonium polyphosphate, 17% pentaerythritol, 7% dicyandiamide and 50% silicone water based elastomer.

A further example includes 17 to 40 parts by weight diammonium phosphate, 17 to 27 parts by weight pentaerythritol, 7 to 27 parts by weight dicyandiamide, 45 to 75 parts by weight of water based elastomer, preferably polychloroprene homopolymer, and 5 to 50 parts by weight of a vitrifying agent as discussed previously. Again, a particularly suitable coating would include 21% diammonium phosphate, 13% pentaerythritol, 7% dicyandiamide, 10% vitrifying agent and 49% water based elastomer.

The above examples do not include the optional reinforcing with the fibreglass fibres, which are applied to the lower surface and about the edge of the foam block. The extent to which the bottom is reinforced will vary and the use of the glass fibres is as but one example of suitable reinforcing which is not limited thereby.

The coatings as described herein are capable of protecting a variety of rigid and/or flexible substrates, including rigid and/or flexible foam substrates, examples of which include urethane foam, polystyrene, or other products, including substrates of softwoods, hardwoods, plywood, carpet backings, steel, alumium, etc., which unless protected would aggressively support combustion or deteriorate, and the application of this coating is not limited to protection of rigid and/or flexible foam shapes. The two part system resulting from the initial formation of an intumescent foam layer which is then locked or stabilized by a vitrifying agent dispersed therethroughout, with the vitrifying agent being of the type to provide protection for a substantially higher temperature range, provides advantages with respect to weight and ease of application of the coating to the product to be protected. Suitable methods of application including spraying, brushing and dipping, as but a few examples. This coating when appropriate vitrifying agents are selected, can protect the product to temperatures for at least a short duration in excess of 1000°C and in some applications in excess of 1800°C.

In the case of flexible foam seats for use in airlines, it is required to protect the product for at least two minutes when the foam block is exposed to a flame having an average temperature of about 1034°C. Initial tests indicate that a number of the coatings described above can be appropriately applied to existing foam seats to produce a coated product that meets the new standards set by the U.S. Federal Aviation Regulation Part 25, Appendix F, Part II.

The coating is easy to apply to the previously formed contoured airline seats, and does not appreciably increase the weight of the seats. The final weight of the coated seats of standard urethane foam tends to be substantially less than the weight of the same seat when made of a non-combustible foam, i.e. a foam which has been treated with a number of fillers which oppose the combustion of the foam block. This coating can be applied to existing cushions thereby allowing the retrofit of airline seats which require protection under the new standard while still providing a satisfactory seat with respect to comfort.

The urethane or polyurethane foam block 32 shown in Figure 5 has an outer peripheral surface 34 and includes particles 36 of the fire retardant composition distributed throughout the foam block. The particles are preferably ground and of a size of less than 50 microns and preferably 6 to 12 microns. The particles are basically carried by the foam product, and only come into play when the product is exposed to combustible temperatures. The natural resiliency of the foam is substantially maintained and the density of the foam is increased somewhat. The fire retardant composition includes a known intumescent material, as described above, dispersed throughout the foam which, when exposed to heat experienced in combustion, progressively produces a protective cellular layer. At least some of the vitrifying material is present at the surface and commences vitrification at a temperature above the initial formation of the protective cellular foam layer. Vitrification of the vitrifying agent essentially locks the protective intumescent material in a cellular foam state and protects this cellular layer from decomposition and/or suppresses dripping of the underlying substrate to increase the effective temperature range of the intumescent cellular foam layer and the insulation properties thereof. The vitrifying material cooperates with the intumescent to provide the second part of protection. In some cases, the urethane foam block will collapse due to exposure to a flame and initially the intumescent will follow the surface of the foam. The vitrification adds structural strength to the formed intumescent layer and serves to maintain an insulating layer about the foam block. Some of the foam block is initially consumed to build up the protective layer and thus the problem of melting and dripping of the melted foam is reduced. It is preferable to have limited controlled combustion to overcome dripping of the product which can spread the fire.

Suitable vitrifying agents include all of the vitrifying agents described for coatings and the maximum temperature level for each agent is in the same order. The vitrifying agent increases the effective maximum temperature of the intumescent alone, preferably by at least 100°C, and in some cases more than doubles the prior maximum temperature.

The addition of the fire retarding composition does not substantially alter the characteristics of the urethane foam with respect to compression and resiliency. The particles of this composition, when exposed to high temperature heat, produces a thick cellular foam layer which is strengthened by vitrification of an agent carried therein.

The fire retarding composition may be distributed throughout the foam product. Up to 30% by weight has been added to a compressible seat cushion product and the degree of fire resistance or retardancy is increased as the percentage added increases. Adding as little as 10% has also proven to increase the fire resistance of the product. Different foam products can accept different levels of solids, for example, most rigid foams can accept higher solid concentrations. Depending upon the end product and the requirements thereof, the amount of the composition can be determined. In addition, non-combustible fillers such as talc can also be added.

Use of the fire retardant compositions with thermoplastic polymers has been demonstrated by addition of 1%, 5% and 10% by weight of the fire retarding composition to a polyolefin viz low density polyethylene; significant improvements in fire retardant properties were obtained. The degree of fire retardancy does vary with the amount loaded into the product and maximum temperatures are provided for guidance and are based on high surface concentrations.

The fire retardant as disclosed and taught herein, whether used alone or in suitable combination with other fillers, reduces dripping associated with the combustion of plastic products and thereby reduces the possibility of the fire spreading.

This fire retardant composition is particularly useful with foam products, however it does have application for use in other plastic products where some degree of fire resistance is necessary. Also, other products such as rubber, paper or other reconstructed man-made products may be suitable where the composition can be added or applied.

Although vitrification locks the intumescent foam, other known materials which add strength can be used with the fire retardant. For example, chlorinated paraffin is a known additive, and in embodiments may be used in the compositions of the invention, especially in amounts of 5 to 50 parts by weight. These additives do not lock in the manner of the vitrifying agent but cooperate with the intumescent to add strength thereto in the normal operating range. The vitrifying agents extend the temperature range and change the performance of the intumescent alone as a cooperative fire retarding insulative layer is formed.

The fire retardant, whether applied as a coating, incorporated in the product, or otherwise associated with the product, is suitable for protecting rigid and/or flexible foam shapes or other products which, unless protected, would aggressively support combustion or for other reasons require protection. The two part protection system is provided by the initial formation of a protective intumescent foam layer which is then locked or stabilized by a vitrifying agent dispersed in the intumescent foam.

The vitrifying agent in combination with the intumescent foam provides protection to a substantially higher temperature and has advantages with respect to weight and ease of application. This fire retardant, when appropriate vitrifying agents are selected and in appropriate concentrations, may protect the product to temperatures in excess of 1000°C for at least a short duration and in some applications in excess of 1800°C.

The composition is easy to add during the manufacture of a foam product, and, in comparison to other fire retardant foams, does not appreciably increase the weight of the foam seats. This fire retardant, when incorporated in a foam product, may add in the order of about 1 pound per cubic foot, significantly less than known non-combustible foams.

The application of this fire retardant foam has been described with respect to a constant foam product, however the non-combustible foam could be applied or formed to the exterior and form a peripheral protective layer having a higher density of the additives at the outer surfaces.

Thus, the fire retardant can be applied as a coating, or directly incorporated in a product or formed in a boundary region of a product, or otherwise associated with a product requiring protection.

Possible fire retardant products include rigid and/or flexible foam substrates used in furniture for institutional and home application, the foam cushions used in automobiles, building products such as wood products, wall boards, carpets, ceiling tiles, structural supports, mattresses, carpets, flooring materials, sheet goods, fire walls and doors are all appropriate. In addition, such foam seat cushions as used in theatres, hospitals, penitentiaries, stadiums, meeting halls, recreational vehicles, etc., could also advantageously include the fire retardant which does not substantially alter the performance of these seats while reducing the combustibility thereof. Other applications will become apparent as use of the fire retardant becomes recognized, and the application of the fire retardant is not restricted by the examples given.

Although various preferred embodiments of the present invention have been described herein in detail, it will be appreciated by those skilled in the art, that variations may be made thereto without departing from the spirit of the invention or the scope of the appended claims.

## Claims

1. A fire retardant composition comprising a known carbon base intumescent material capable, when exposed to heat of combustion, of producing a protective cellular foam; and
a. vitrifying agent capable of stabilizing the carbon of the intumescent when exposed to a temperature which would otherwise cause decomposition of the foamed intumescent, said vitrifying agent stabilizing the carbon of the intumescent by vitrifying and combining therewith.

2. The fire retardant composition of claim 1 further comprising a carrier.

3. The fire retardant composition of claim 2 in which the carrier is a preferably water-based elastomer, preferably a neoprene or silicone elastomer.

4. The fire retardant composition of claim 3, said composition including a buffer suitable to avoid adverse pH effects to the carrier when combined with the intumescent material.

5. The fire retardant composition of any one of claims 1 - 4 in which the vitrifying material is selected from the group consisting of hydrated magnesium silicate, silica powder, silicone resins, sodium tetraborate and nepheline syenite.

6. The fire retardant composition of any one of claims 1 - 4 in which the vitrifying material is a water-based silicone elastomer, said elastomer by preference additionally being the carrier of said composition.

7. The fire retardant composition of any one of claims 1 - 6 in which said intumescent material comprises: 17 to 40 parts by weight of ammonium polyphosphate; 17 to 27 parts by weight of pentaerythritol; and 7 to 27 parts by weight of dicyandiamide.

8. The fire retardant composition of claim 7 in which the carrier is 45 to 75 parts by weight of water-based elastomer.

9. The fire retardant composition of claim 7 or 8 in which there are 5 to 50 parts by weight of vitrifying agent.

10. The fire retardant composition of any one of claims 7 - 9 in which the composition contains 5 to 50 parts by weight of chlorinated paraffin.

11. A plastic product or a synthetic plastic foam product or a composite product having incorporated therein a fire retardant composition of any one of claims 1 - 10.

12. The product of claim 11 in which the plastic is a polyolefin.

13. A synthetic foam product or a plastic product or a fire retardant having a coating of a fire retardant composition of any one of claims 1 - 10.

14. The product of claim 13, in which said coating is of a thickness of at least .010 inches.

15. The product of claim 11 or 12 in which the amount of fire retardant composition incorporated therein is in excess of about 10% by weight, preferably in excess of about 20% by weight.

16. The product of any of claims 11 - 15, in which the density of the fire retardant composition is greater at exposed surfaces of the product.

17. An article having a substrate and a protective flexible fire retardant coating on the surface of the substrate, said coating comprising an elastomeric material
a known carbon base intumescent material dispersed throughout said elastomeric material, said intumescent material being capable, when exposed to heat of combustion, of foaming and producing a protective cellular foam; and
a vitrifying agent dispersed throughout said elastomeric material and capable of commencing vitrification at a temperature substantially above the temperature at which the foamed layer is formed but below the temperature of decomposition of the intumescent, said vitrifying agent being capable of stabilizing the carbon of said intumescent when exposed to a temperature which would otherwise cause decomposition of the foamed intumescent, said vitrifying agent increasing the effective maximum temperature of said intumescent foam by at least 100°C.

18. The article of claim 17, in which the thickness of the coating is less than 0.060 inches, but by preferance at least 0.010 inches.

19. The article of claim 17 or 18 in which the elastomeric material is the material of the carrier of claim 3 or 4, and/or in which the vitrifying material is that of claim 5 or 6, and/or in which the intumescent material is that of claim 7, and/or comprising the elastomeric material in the amounts of claim 8, and/or the vitrifying agent in the amount of claim 9 and/or the coating contains 5 to 50 parts by weight of chlorinated paraffin.

20. The article of any of claims 17 - 19, in which the substrate thereof is flexible and/or rigid.

21. The article of any of claims 17 - 20, in which at least a portion of said coating is reinforced with glass fibres.

22. The article of any of claims 17 - 21, in which said coating is capable of providing protection for at least two minutes when exposed to a temperature of about 1000°C.

23. The article of any of claims 17 - 22, in which the substrate thereof is urethane foam, polystyrene, hardwood, softwood, metal, a sheet material, a cushion and/or a foamed material.

24. The article of any of claims 17 - 23, in which the elastomeric material improves the adhesion of the coating to the substrate.

25. A method of treating a preshaped rigid and/or flexible substrate comprising applying a fire retardant composition to the surface of said substrate, said fire retardant composition comprising a carrier;

a known carbon base intumescent material capable, when exposed to heat of combustion, of producing a protective cellular foam; and

a vitrifying agent capable of stabilizing the carbon of the intumescent when exposed to a temperature which would otherwise cause decomposition of the foamed intumescent, said vitrifying agent stabilizing the carbon of the intumescent by vitrifying and combining therewith.

26. The method of claim 25 followed by the step of drying the coating thus obtained.

27. The method of claim 25 or 26 using the carrier of claim 3 or 4, the vitrifying material of claim 5 or 6, the intumescent material of claim 7 by preference in the amounts of claims 8 - 10.

28. The method of any of claims 25 - 27, in which the components of the coating are combined during application of said coating.

29. The method of any of claims 25 - 28, in which the method of application of the coating is by means of a spray.

30. The method of any of claims 25 - 29, in which the coating composition contains a pigment.

31. The method of any of claims 25 - 30, in which the resultant coating encapsulates the product.

FIG.1.

FIG.2.

FIG.3.

FIG.4.

FIG.5.